# EUROPEAN PATENT SPECIFICATION

(11) **EP 4 485 242 B1**
(45) Date of publication and mention of the grant of the patent: **09.09.2026**
(21) Application number: 23181559.8
(22) Date of filing: 26.06.2023
(51) Int. Cl.: G06F 21/52, G06F 11/14

(54) **PROTECTION OF COMPUTER PROGRAM CODE**
SCHUTZ EINES COMPUTERPROGRAMMCODES
PROTECTION DE CODE DE PROGRAMME INFORMATIQUE

(43) Date of publication of application: 01.01.2025
(73) Proprietor: Irdeto B.V., 2132 LS Hoofddorp (NL)
(72) Inventor: MEERWALD-STADLER, Peter, 2132 LS Hoofddorp (NL); PÜHRINGER, Matthäus, 2132 LS Hoofddorp (NL); RAUCH, Leo, 2132 LS Hoofddorp (NL); SCHÖCHL, Wolfgang, 2132 LS Hoofddorp (NL); FISCHER, Matthias, 2132 LS Hoofddorp (NL); MAURI, Francesco, 2132 LS Hoofddorp (NL)
(74) Representative: Boult Wade Tennant LLP

(56) References cited:
- US-A1- 2011 088 021
- US-B1- 8 239 836
- LARSEN PER ET AL: "SoK: Automated Software Diversity", 2014 IEEE SYMPOSIUM ON SECURITY AND PRIVACY, IEEE, 18 May 2014 (2014-05-18), pages 276 - 291, XP032686146, ISSN: 1081-6011, [retrieved on 20141113], DOI: 10.1109/SP.2014.25

## Description

The invention relates to the protection of computer program code, for example to make dynamic analysis and tracing more difficult for an attacker to carry out. It may be applied, for example, to the protection of particular code portions which carry out security sensitive functions such as encryption and key management, digital rights management, copy protection and so forth.

### Introduction

Encryption of portions of software such as program code and related data can be used to guard against static analysis and static patching of software binaries which attackers may use in an attempt to circumvent security measures incorporated within the software. Decryption of encrypted software portions may typically take place during runtime of the software, and the decrypted code may be written in place over the encrypted code. However, this decryption activity can be used by attackers using dynamic analysis techniques to find points of interest in the software binary.

For example, it can be relatively easy for an attacker to find such points of interest using traces or modern tools such as Pin (Intel's dynamic binary instrumentation tool), DynamoRIO (runtime code manipulation and transformation tool), angr or Triton or Manticore (symbolic execution tools), or IDA (disassembler and decompiler). The attacker can then look at these points of interest during future program executions. Using this knowledge, attackers can mark certain sections of the software binary as read-only. When decryption of encrypted portions into the marked sections are attempted by the software itself during runtime, write error exceptions are triggered. This can then reveal locations where decrypted material is to be found.

An attacker can then handle these exceptions (for example by installing a custom exception handler) and observe program execution at these locations. If the decrypted material is used to implement security measures within the software, this can then enable an attacker to develop circumventions of such security measures for example by dynamically patching the decrypted portion during runtime.
US8239836 B1 discusses techniques, computer program products, apparatus and systems for controlling operation of a program code in a digital processor, a computer or a computer system, including techniques for generating program variants, monitoring execution of a program and variants of the program, and detecting functional differences between the multiple executions.

### Summary of the invention

Embodiments of the invention can be used to help protect computer programs from malicious analysis and attack, and in particular can be used to help protect security sensitive code portions of such computer programs, for example code portions which are used to manage access, encryption, digital rights management, and other security related issues.

For example, embodiments of the invention can be used to make dynamic analysis and patching of software binaries in multi-threaded software execution much more difficult to implement. To this end, aspects of the invention implement reproduction of program code into dynamically allocated thread-local memory. Decryption of the program code therefore no longer needs to happen in place, but can take place as part of reproduction of the program code into the memory dynamically allocated for a particular thread, which is much harder to find using attack methods such as those mentioned above. It also becomes harder for an attacker to use dynamic patching with a custom exception handler because it is not evident before program execution what memory addresses need to be set read-only by attackers, since the relevant memory addresses are dynamically allocated during runtime. In addition, each thread may be allocated its own unique memory location for such decryption which multiplies the complexity for an attacker to observe and interact with all locations at the same time.

Accordingly, the invention provides a method of executing computer program code comprising a code portion which has been loaded into a program memory space as first executable code, and for which a plurality of threads have been instantiated for execution of the computer program code, the method comprising: dynamically allocating a thread memory space for each thread; for each thread, reproducing said code portion from the first executable code into the corresponding dynamically allocated thread memory space; and during execution of each thread, executing the reproduced code portion in said dynamically allocated thread memory space instead of executing the code portion in the first executable code.

Similarly, the invention provides a method of executing computer program code comprising a code portion, comprising: loading said computer program code into a program memory space as first executable code; instantiating a plurality of threads for execution of said computer program code; dynamically allocating a thread memory space for each thread; for each thread, reproducing said code portion from the first executable code into the corresponding dynamically allocated thread memory space; and during execution of each thread, executing the reproduced code portion in said dynamically allocated thread memory space instead of executing the code portion in the first executable code. To this end, it will be understood that the described methods may typically be computer implemented methods which are carried out automatically on suitable computer equipment.

Typically, the loaded first executable code may be a memory-mapped executable file or a memory mapped binary. The code portion when loaded into the program memory space as the first executable code may typically be in encrypted form, and reproducing the code portion from the first executable code into each corresponding dynamically allocated thread memory space may then comprise decrypting the code portion and loading the decrypted form into each corresponding dynamically allocated thread memory space.

Although the reproduced code portion may be the same for each thread, the method may instead comprise, for each thread, altering the code portion from the first executable code such that the reproduced code portion for each thread is different from that of each of the other threads. In this way, it is harder for an attacker to accurately and reproducibly find, and then analyse or modify, the code portion in decrypted form. For example, for each thread, altering the code portion may comprises altering the code portion using data unique to that thread such as one or more of: an id of the thread; an allocated address of the dynamically allocated thread memory space of the thread; a stack address of the thread, one or more unique thread values from a thread environment block of the thread, and so forth.

The degree of difference between the different reproduced code portions for different threads may vary, but typically should be sufficiently different to make it challenging to map between traces of the different reproduced code portions. For example, at least 1% or at least 10% of the code portions may be different to each other. However, providing that at least one or optionally at least two instructions of the reproduced code portions are different may be a sufficient degree of difference. An objective of making the reproduced code portion for each thread different from that of each of the other threads may be that they are not equal byte for byte and trivially comparable, such that the reproduced code portions need to be either manually looked at or automatically compared against and checked for semantic equivalence.

In some implementations, even though the reproduced code portions for the different threads may be different, they may still all be semantically equivalent to each other. However, in other implementations, at least some and optionally all of the reproduced code portions are not semantically equivalent to each other, and the first executable code may then further comprise a code portion decoder arranged to interface with each reproduced code portion, so that each combination of one of the reproduced code portions with the decoder is semantically equivalent to each of the other such combinations.

Before reproducing said code portion into each corresponding dynamically allocated thread memory space, a first code portion memory space may be allocated within each dynamically allocated thread memory space, wherein the code portion is then reproduced into that first code portion memory space of each thread. Subsequently then, during the same execution of the first executable code, a second code portion memory space is allocated within each dynamically allocated thread memory space at a different position (optionally overlapping, but not congruent) within said dynamically allocated thread memory space to said first code portion memory space. The code portion is then reproduced into that second code portion memory space, and executed. Because the same code portion is found at different memory positions within the same execution of the computer program, this further frustrates attempts to trace and analyse execution of the code portion both across threads and even within the same thread.

If the computer program code comprises more than one different code portion to which these techniques are applied, and in particular a further code portion, then the method may further comprise: before reproducing said code portion from the first executable code into each corresponding dynamically allocated thread memory space, allocating a first code portion memory space within each dynamically allocated thread memory space, wherein the code portion is then reproduced from the first executable code into that first code portion memory space of each thread; subsequently during the same execution of the computer program code, allocating a second code portion memory space within each dynamically allocated thread memory space which overlaps with said first code portion memory space, reproducing the further code portion from the first executable code into the second code portion memory space, and executing the further code portion in the second code portion memory space. In this way, attempts to dynamically trace and analyse operation of the thread are again made more difficult.

The described techniques can be used or implemented by a developer when modifying an existing computer program to make it more resistant to analysis and attack. For example, the invention provides a method of modifying a computer program comprising a code portion arranged to execute within multiple threads, the method comprising adding to the computer program a computer program function or element, such as a bootstrap element, which is arranged to reproduce said code portion into a dynamically allocated thread memory space of each thread during execution of the computer program, and to cause the reproduced code portion to execute, for each thread, from within, or using the reproduced version within, the corresponding dynamically allocated thread memory space.

Reproducing said code portion can comprise any of the various techniques described herein, for example one or more of: decrypting said code portion; reproducing said code portion so as to be different in each dynamically allocated thread memory space; and reproducing said code portion so that the reproduced code portion in each dynamically allocated thread memory space is not semantically equivalent to the reproduced code portion in each of the other dynamically allocated thread memory spaces.

The invention also provides an apparatus, such as a computer or computer system arranged to carry out the described methods.

### Brief description of drawings

Embodiments of the invention will now be described, by way of example only, with reference to the accompanying drawings of which:
Figure 1 shows schematically the multi-threaded execution of a computer program in which a code portion is reproduced separately into dynamically allocated memory for each thread, where the reproduction optionally includes decryption into that dynamically allocated memory;
Figure 2 shows how the arrangement of figure 1 can be modified such that the reproduced code fragment is different for each thread;
Figure 3 shows how the arrangement of figures 1 and 2 can be modified such that each reproduced code fragment is not semantically equivalent to each of the reproduced code fragments for the other threads;
Figure 4 schematically shows in more detail how the computer program may be structured and operated to function in accordance with the arrangements of figures 1 and 2;
Figure 5 schematically shows in more detail how the computer program may be structured and operated to function in accordance with the arrangements of figure 3;
Figure 6 illustrates a computer system within which the described embodiments may be implemented; and
Figure 7 schematically shows an existing computer program into which a developer may implement functionality and aspects as illustrated in figures 1 to 6 so as to improve protection against attack.

### Detailed description of embodiments

In reverse engineering of computer program code, either static or dynamic code analysis may be used. One way to prevent static code analysis (i.e. code analysis without running the code) is code encryption, leaving attackers the option of dynamic code analysis during code runtime. Faster CPUs and modern tools, however, allow for keeping a trace record of code execution, and new analysis methods such as symbolic execution help navigate and assist in dynamic code analysis.

When a binary file is loaded into memory as first executable code, for example as a memory-mapped executable file or a memory-mapped binary, and code execution commences, its code lies at specific memory addresses relative to the binary memory image base and trace records will show code decryption and reveal these locations of interest. This, and because computer program code typically does not change between different executions of a binary, makes it possible for an attacker to record a trace of the program and interact with the binary in future executions using the data gathered in that trace.

One way to strengthen code encryption techniques is by allocating memory during runtime, for example on the heap, making this memory writeable and executable, and then copying, decrypting, and executing code on this heap memory. These steps are typical of an operating system loader (e.g. the Windows loader or the Linux loader) that loads a binary file into memory before execution, or of Just-In-Time (JIT) compilers (e.g. Java Virtual Machine, C# Common Language Runtime, Android Runtime) that generate code during program runtime on the heap before execution. These methods are optimized for efficiency and reusability and thus have one global location of the code (copied once) on the heap space that is shared across multiple threads and even across multiple processes. When recording a trace of such a program, the trace will look identical apart from the memory addresses of the code being executed on the heap which will change with each execution.

In contrast, embodiments of the invention implement code duplication via thread-local code execution on allocated memory using thread-local storage operations. Essentially, code portions such as instruction sequences with certain properties are written or reproduced into thread specific allocated memory which is typically allocated during thread creation only usable by that thread.

This memory can be freed again after execution of the reproduced code portion is completed, after a specific time has passed, or even as late as during thread shutdown. It can also be reused for different code portions before being freed. The important aspect of this approach is that instead of having one copy of a particular code portion on the heap, which is accessible globally by all threads, a thread local copy of the code portion lies in specific thread allocated memory during execution and is used only by that thread. This alone makes it harder for an attacker to analyse during runtime, but also enables the addition of multiple security options to the reproduced code on each thread as will be detailed below. In addition, requirements for synchronization or locking mechanisms between threads, when working on the same code portion regarding decryption, can be reduced or avoided.

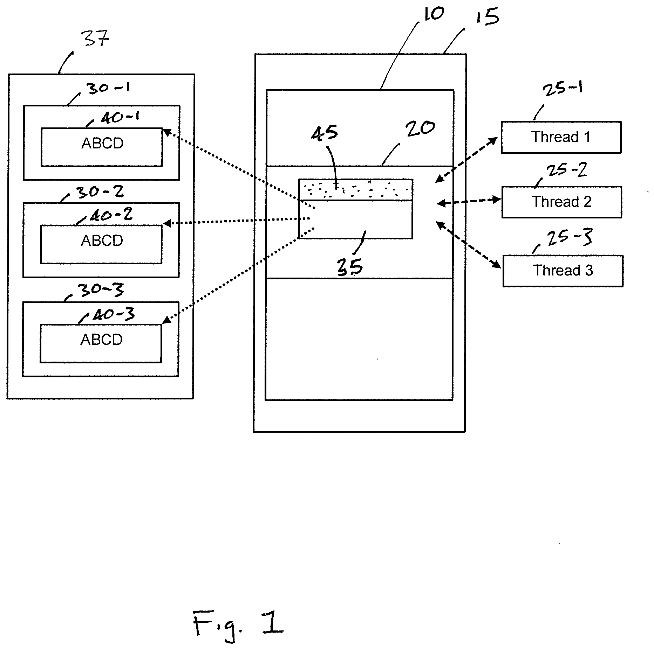

Referring now to figure 1, a method of executing computer program code is illustrated. The program code is loaded into a program memory space 15 for execution as first executable code 10. At least a section 20 of the program code is executed through the instantiation and execution of a plurality of threads 25-1, 25-2, 25-3. For each thread 25 a corresponding thread memory space 30-1, 30-2, 30-3 is dynamically allocated during runtime of the program code, for example on a memory heap 37 or other dynamically allocated memory space. The code section 20 then comprises at least one code portion 35, which for each thread 25, is reproduced into the corresponding dynamically allocated thread memory space 30 as a reproduced code portion 40-1, 40-2, 40-3. Although in figure 1 for clarity the heap 37 is depicted separately from the program memory space 15, it may typically form a part of the program memory space.

During execution of each thread, the corresponding reproduced code portion 40 in the corresponding dynamically allocated thread memory space 30 is then executed, rather than execution of the original code portion 35 in the first executable code 10.

Typically, the code portion 35 of the first executable code 10may be in encrypted form. Reproducing the code portion from the first executable code into each corresponding dynamically allocated thread memory space may then comprise decrypting the code portion and loading the decrypted portion into the corresponding dynamically allocated thread memory space.

Typically, the instantiation of the threads 25, the dynamic allocation of a thread memory space 30 for each thread, and the reproduction of the code portion 35 into the dynamically allocated thread memory space, which may include decryption of the code portion 35 and/or other operations as discussed below, may be managed or carried out by bootstrap code 45, typically located within the code section 20.

The arrangement of figure 1 already makes it more difficult for an attacker to use dynamic code analysis to attack the code portion, by ensuring that the code portion 35 for each thread is located at a different memory location, and at memory location which changes between executions of the binary through the use of dynamically allocated memory, and indeed potentially between multiple instances of reproduction of the code portion within the same execution of the first executable code 10. However, such code duplication via thread-local code execution on dynamically allocated thread memory space allows for various further security techniques to be implemented which add further measures against dynamic code analysis. In some implementations, the same further security technique may be used with the reproduced code portion of each thread, or different such techniques or different combinations of all, some, and none, of multiple such security techniques may be used for the reproduced code portion of each thread. An attacker is then forced to try to look at multiple copies of the same code portion at different locations within the heap, with the potential that each code portion also has different further security techniques applied to it.

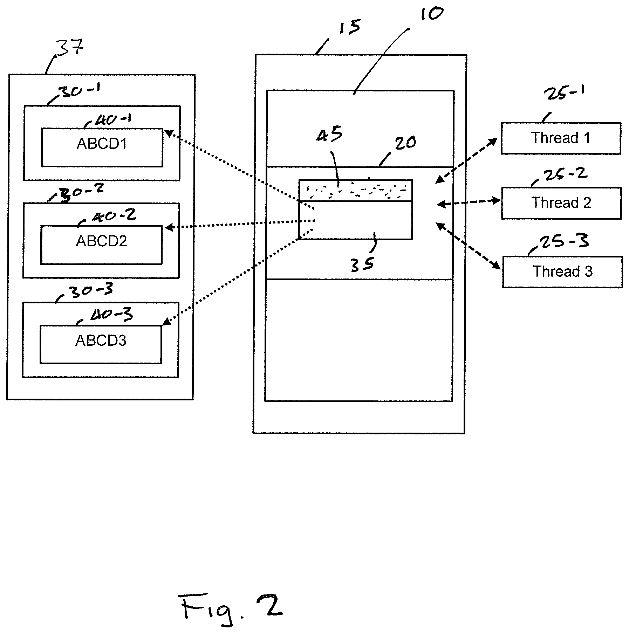

Some such further security techniques involve individualizing each code portion during reproduction into the corresponding dynamically allocated thread memory space, so that the code portion for each thread is different from that of the other threads, for example by the reproducing step using data unique to each thread such as one or more of: an id of the thread, an allocated address of the dynamically allocated thread memory space of the thread, a stack address of the thread, one or more unique thread values from a thread environment block of the thread, and so forth. Figure 2 shows one way in which this may be implemented while preserving semantic equivalence of each reproduced code portion.

In particular, figure 2 is similar to figure 1, but whereas in figure 1 the reproduced code portions are typically all identical (as indicated the ABCD, ABCD, ABCD labels), in figure 2 each reproduced code portion is different, as indicated by the ABCD1, ABCD2, ABCD3 labels. As indicated above, these differences may be generated by the bootstrap code 45 using data unique to the thread of that code portion, for example one or more of an id of the thread, an allocated address of the dynamically allocated thread memory space of the thread, a stack address of the thread, one or more unique thread values from a thread environment block of the thread, and so forth. The differences could be rather cosmetic, for example using different dummy data of different values, sizes, spacings or distributions within the decrypted code portion, or more structural for example with the order of code instructions or order of operations being carried out being varied according to the data, or indeed any semantic preserving code transformation such as an optimization or obfuscation. The differences between the reproduced code portions for different threads should be such that each reproduced code portion looks different to an attacker from recorded dynamic analysis traces.

Typically however, in the arrangement of figure 2, each of the reproduced code portions will be semantically equivalent, so that an output of each code portion would be the same given the same data input.

Values such as thread id, allocated address of the dynamically allocated thread memory space of the thread, stack address of the thread, thread values from a thread environment block (TEB of the thread), and so forth vary by thread and more importantly between subsequent program executions, which prevents an attacker from recording consistent traces across different program executions. This in turn makes it much harder to find key locations by using previous traces for future program executions and thus makes it harder for an attacker to modify or successfully interact with the code portion, for example with the aim of circumventing security related functions implemented using the code portion. It may thereby force actual automatic runtime code analysis (for example using custom exception handlers and marking memory read-only) and automatic runtime patching (i.e. dynamic patching) from an attacker which requires extensive knowledge to build and deploy. Forcing an attacker to use such techniques also makes it easier for a legitimate operator or originator of the computer program code to observe and understand the attack methods being used.

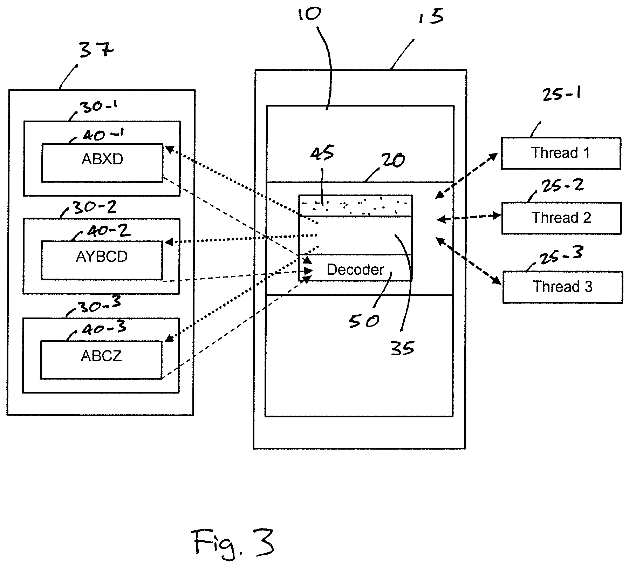

Whereas in the arrangement of figure 2 the reproduced code portions are semantically equivalent, figure 3 shows a similar arrangement in which the reproduced code portions are not only different for each thread, but are also not semantically equivalent to each other. In figure 3 this is indicated by the reproduced code portions being labelled with one or more additional or different letters as in ABXD, AYBCD and ABCZ. If not semantically equivalent then, for the same data input, each such code portion does not produce the same data output, at least for some data input values, and preferably for most or all data input values. To preserve the function of each reproduced code portion within the code section 20, a code portion decoder 50 is therefore also provided, typically as part of the code section 20 which is not reproduced into dynamically allocated memory, which translates outputs from the reproduced code portions so that when taken together with each reproduced code portion, does provide semantic equivalence.

Reproduction of the code portion from the first executable code into each dynamically allocated thread memory space while not retaining semantic equivalence between the reproduced code portions could be relatively simple for example by adding a logic step of combining a data value with a thread id in a manner that can be reversed by the code portion decoder 50, or could be much more complex.

Various other further security techniques may be applied in reproducing the code portion into each dynamically allocated thread memory space. Other further security techniques may include the use of multiple-memory mappings, for example in which a first memory address mapping is used for writing/copying the code portion into the dynamically allocated thread memory space, and another different memory address mapping for execution of the code portion within the dynamically allocated thread memory space.

Whatever such further techniques, if any, are used, the described code portion reproduction into separate dynamically allocated memory spaces for each thread for local code execution leads to several further benefits. For example, in the prior art, when an encrypted code portion is accessed by multiple threads at the same time, there is typically a need for synchronization between threads as only one thread can work on the encrypted code portion (including for example decryption in place within the first executable code, execution, and encryption again) at the same time. With the described technique of code duplication via thread-local code execution on allocated thread memory space, this need for synchronization is avoided as each thread is working on its own copy of the code portion and does not need to wait for other threads to finish.

Another advantage to the described approach is, when a particular thread executes multiple different code portions over time, different code portions may be reproduced into the same dynamically allocated thread memory space, so that the same memory addresses will hold different code portions at different times. In other words, a code portion may be reproduced into a first code portion memory space within a dynamically allocated thread memory space, then subsequently a different code portion is written into a second code portion memory space of the same dynamically allocated thread memory space. Especially if the first and second code portion memory spaces overlap, then when an attacker inspects dynamic analysis traces, the same memory addresses will be associated with different code portions at different parts of the trace over time. Furthermore, a memory dump including dynamically allocated thread memory spaces made during program execution will give different results depending on the time of the memory dump.

Similarly, if a particular thread executes the same code portion multiple times, and each time carries out a fresh reproduction of the code portion into the dynamically allocated thread memory space instead of reusing a previous reproduction, the same memory addresses will hold different parts of the code portions at different times. In other words, a code portion may be reproduced into a first code portion memory space within a dynamically allocated thread memory space, then subsequently the same code portion may be written into a second code portion memory space of the same dynamically allocated thread memory space which is not congruent with the first, again making dynamic tracing of the program execution more difficult.

More detailed examples of the arrangements described above will now be provided, largely set in the context of using static thread local storage. Current Windows (RTM) operating systems, for example, allow for two main options for thread local storage, that is storage space that is unique for each thread. The first option is dynamic thread-local storage that is accessed via the Windows API including TlsAlloc(), TlsSetValue(), TlsGetValue() and TlsFree(). While this is relatively easy to use, it is also very visible and easy for an attacker to intercept, for example via Windows API hooking. To securely implement code duplication via thread-local code storage and execution on allocated memory using thread local storage, the second option of static thread-local storage may therefore be preferable.

To access static thread-local storage data within a computer program, one would typically use compiler keywords such as "thread_local" in C++, and then handle the resulting data structures like any other variable. The compiler will then make sure that the compiled code correctly accesses and initializes this variable for each thread. In this C++ example:
**thread_local int i = 10;**
a local variable i would be created for each thread that is unique to that thread and would be initialized with the value 10. This template data is stored in the first executable code 10, and during thread creation is copied to the thread's specific thread environment block (TEB).

If the location of the template data in the binary image is known by a developer wishing to better protect the computer program by making it more difficult for an attacker, by implementing the described techniques within the computer program, the developer can use suitable tools for binary examination, disassembly, inserting security code, and reassembly, to add particular own static thread-local storage data without the need for source code changes. At this protection step, the developer can also profile the binary to find code portions suitable for execution on thread specific allocated memory, that is, code portions that will actually execute on multiple threads either at the same time or at different times, and which adhere to specific properties that allow these code portions to be moved to allocated memory, e.g.: no relocations, no external control flow, and similar. These code portions can then be marked accordingly as well having the necessary bootstrap code 45 added, that is code for copying and optionally modifying (depending on details of the implementation) a code portion on the allocated memory, as well as a code portion decoder 50 if required, that is code which in combination with a code portion reproduced to multiple dynamically allocated thread memory spaces provides semantical equivalence for all of the reproductions of the code portion in respect of the multiple threads.

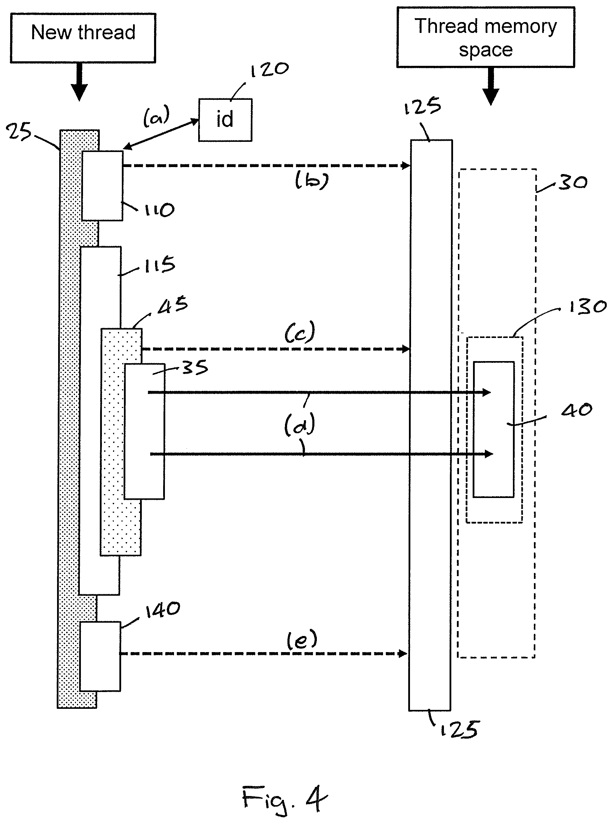

Referring now to figure 4, when a new thread 25 is created during runtime, first thread specific thread-local storage callbacks 110 are executed before the thread's main routine 115 is called. These first thread-local storage callbacks 110 are used to initialize static thread-local storage data, and include a thread-local storage callback that may (a) store some security relevant data 120 such as a thread id, and which uses a thread-local allocator 125 to (b) dynamically allocate, and subsequently manage, a thread memory space 30 for the thread, within the dynamically allocated memory or heap 37 (not shown in this figure).

There are several different strategies possible for this thread-local allocator 125 to manage this dynamically allocated thread memory space 30, including using Windows API calls such as HeapAlloc() and HeapFree(), using a fixed kind of scratchpad memory and returning a pointer to that memory, and using a more complicated offset based internal memory management. A role of the thread-local allocator 125 is to manage the dynamically allocated thread memory space 30 in a secure way, including by storing memory addresses, offsets, and other operational data by using various static thread-local storage data offsets.

After the first thread-local storage callbacks 110 are completed, execution passes to the main routine 115 of the thread. When the main routine 115 reaches bootstrap code 45 associated with a code portion 35 being protected by the described techniques, the bootstrap code 45 requests (c) a code portion memory space 130 within the dynamically allocated thread memory space 30 from the thread-local allocator, and reproduces (d) the code portion 35 into that code portion memory space 130 as reproduced code portion 40, for execution. If required, the reproduction into the code portion memory space 130 may include decryption of the code portion 35, and/or modification in various other ways for example to apply various further security techniques as described elsewhere in this document.

Note that typically, however, for each request to the thread-local allocator 25 to allocate a code portion memory space 125, the thread-local allocator will use a random or quasi-random offset within the dynamically allocated thread memory space, making dynamic code analysis more difficult for an attacker. Furthermore, the dynamically allocated thread memory space for a particular thread will also be at a different position in the dynamically allocated memory for each execution of the binary.

After execution of the reproduced code portion 40, control is returned to the bootstrap code 45 and thence back to the thread main routine 115. At later points in the thread execution, the code portion memory space can be managed by the thread-local allocator in various ways, for example it can be kept so that if the same code portion 35 is to be executed again in the same thread the reproduced code portion 40 can be reused, and only deleted at the end of the thread.

Alternatively or additionally, the code portion memory space can be released and made available immediately on completion of execution of the reproduced code portion, or after a certain time, to be used, in whole or in part, to receive reproductions of other, different code portions of the same thread, or further reproductions of the same code portion. In any case, during thread shutdown, second thread-local storage callbacks 140 are executed in which the thread-memory allocator 125 makes sure that the allocated thread space memory for that thread is (e) freed again from the operating system memory manager so as to avoid memory leaks.

To illustrate further the arrangements of figures 2 and 4, the following first example code fragment CF1 adds two values in assembler. In this example it is assumed that the first thread-local storage callbacks 110 use the thread-local allocator 125 to allocate a set amount of dynamically allocated thread memory space 30 at around the time the thread is created, and that the thread-local allocator 125 is used to return random offsets within that dynamically allocated thread memory space whenever memory is requested from it, and subsequently frees the whole of the dynamically allocated thread memory space region at thread shutdown under second thread-local storage callbacks 140:

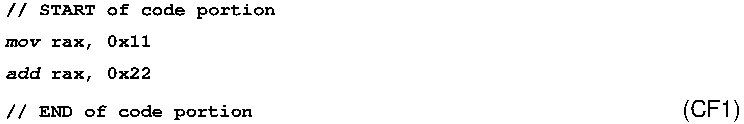

This first code portion will add the two hexadecimal values 0x11 and 0x22 and store the result in the register rax. Using this example, we can add the further security technique of figure 2 of making each reproduced code portion unique using the thread's id or some other thread specific data, while retaining semantic equivalence between all of the reproductions of a particular code portion for multiple threads. In the following example code fragment CF2, the Windows API call getThreadld() is used, but other options to obtain the thread id are possible like, for example, accessing it via static thread-local storage data stored there during the thread-local storage callback. The code portion 35 itself can then be changed during the reproduction process to look like this second example code fragment CF2 of a reproduced code portion 40:

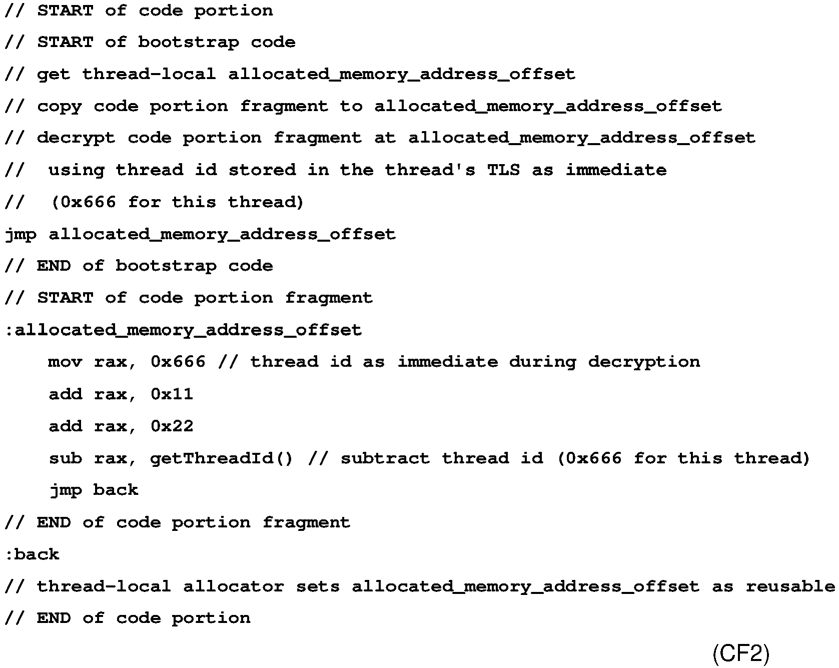

At the end of this reproduced code portion 40, the rax register then still carries the value 0x33 and thus all reproductions of the code portion for multiple different threads remain semantically equivalent.

If instead we add the further security technique illustrated in figure 3, and introduce the code portion decoder 50 of figure 3 to impose semantic equivalence of a combination of each reproduced code portion 40 and the code portion decoder 50, the reproduced code portion 40 may then instead look like the following third example code fragment CF3. Introducing a code portion decoder 50 in this way allows for different code (i.e.: a unique reproduced code portion for each thread without preserving semantic equivalence) to be executed on each thread's allocated memory space while ensuring that that code can only run on that specific thread as it would otherwise produce incorrect data outputs.

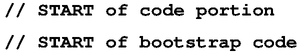

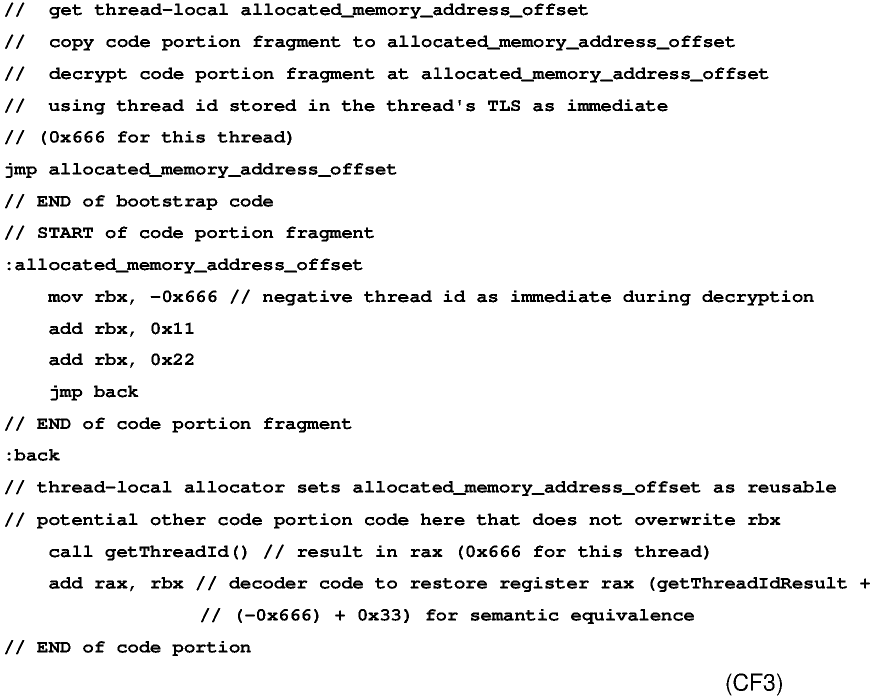

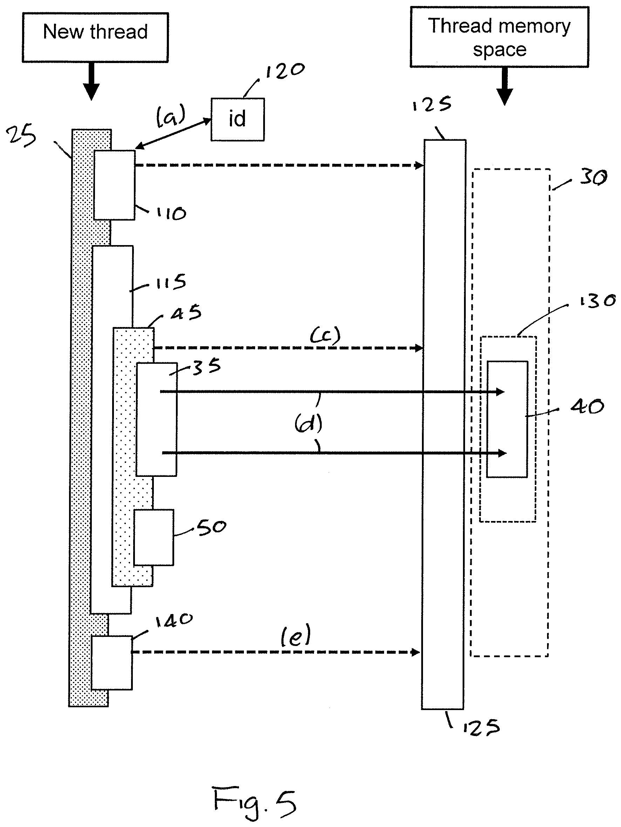

Implementation of this second further security technique is also illustrated in figure 5, which is the same as figure 4 except for the addition of a code portion decoder 50 within the execution of bootstrap 45, to translate data output of the reproduced code portion 40 to preserve semantic equivalence when the reproduced code portions 40 different threads are not semantically equivalent.

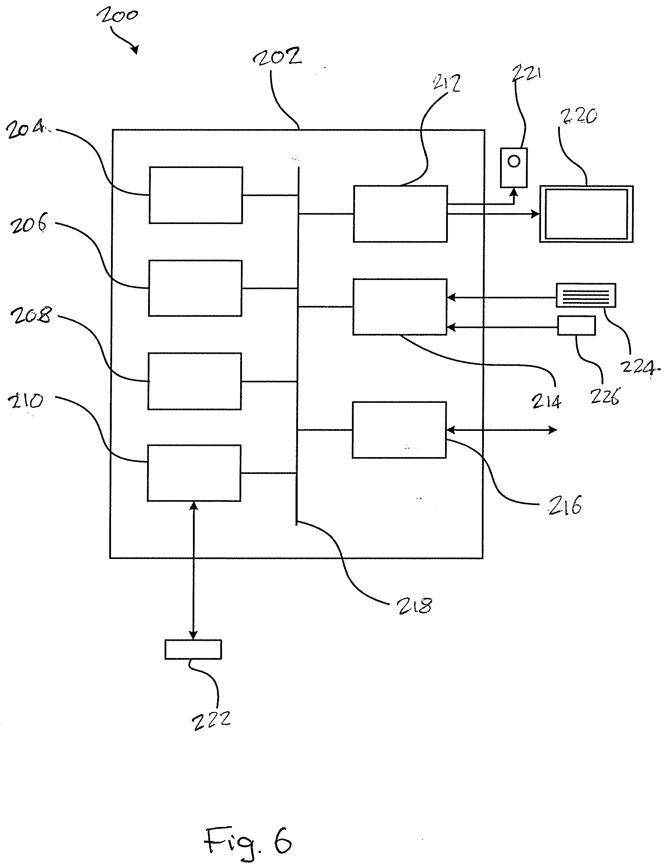

Figure 6 schematically illustrates an example of a computer system 200 upon which the described techniques may be implemented. The system 200 comprises a computer 202. The computer 202 comprises: a storage medium 204, a memory 206, a processor 208, an interface 210, a user output interface 212, a user input interface 214 and a network interface 216, which may be linked together over one or more communication buses 218.

The storage medium 204 may be any form of non-volatile data storage device such as one or more of a hard disk drive, a magnetic disc, an optical disc, a solid-state-storage device, a ROM, etc. The storage medium 204 may store an operating system for the processor 208 to execute in order for the computer 202 to function. The storage medium 204 may also store one or more computer programs (or software).

The memory 206 may be any random access memory (storage unit or volatile storage medium) suitable for storing data and/or computer programs (or software).

The processor 208 may be any data processing unit suitable for executing one or more computer programs (such as those stored on the storage medium 204 and/or in the memory 206), some of which may be computer programs according to embodiments of the invention or computer programs that, when executed by the processor 208, cause the processor 208 to carry out a method according to an embodiment of the invention and configure the system 200 to be a system according to an embodiment of the invention. The processor 208 may comprise a single data processing unit or multiple data processing units operating in parallel, separately or in cooperation with each other. The processor 208, in carrying out data processing operations for embodiments of the invention, may store data to and/or read data from the storage medium 204 and/or the memory 206.

The interface 210 may be any unit for providing an interface to a device 222 external to, or removable from, the computer 202. The device 222 may be a data storage device, for example, one or more of an optical disc, a magnetic disc, a solid-state-storage device, etc. The device 222 may have processing capabilities - for example, the device may be a smart card. The interface 210 may therefore access data from, or provide data to, or interface with, the device 222 in accordance with one or more commands that it receives from the processor 208.

The user input interface 214 is arranged to receive input from a user, or operator, of the system 200. The user may provide this input via one or more input devices of the system 200, such as a mouse (or other pointing device) 226 and/or a keyboard 224, that are connected to, or in communication with, the user input interface 214. However, it will be appreciated that the user may provide input to the computer 202 via one or more additional or alternative input devices (such as a touch screen). The computer 202 may store the input received from the input devices via the user input interface 214 in the memory 206 for the processor 208 to subsequently access and process, or may pass it straight to the processor 208, so that the processor 208 can respond to the user input accordingly.

The user output interface 212 is arranged to provide a graphical/visual and/or audio output to a user, or operator, of the system 200. As such, the processor 208 may be arranged to instruct the user output interface 212 to form an image/video signal representing a desired graphical output, and to provide this signal to a monitor (or screen or display unit) 220 of the system 200 that is connected to the user output interface 212. Additionally or alternatively, the processor 208 may be arranged to instruct the user output interface 212 to form an audio signal representing a desired audio output, and to provide this signal to one or more speakers 221 of the system 200 that is connected to the user output interface 212.

Finally, the network interface 216 provides functionality for the computer 202 to download data from and/or upload data to one or more data communication networks.

It will be appreciated that the architecture of the system 200 illustrated in figure 6 and described above is merely exemplary and that other computer systems 200 with different architectures (for example with fewer components than shown in figure 6 or with additional and/or alternative components than shown in figure 6) may be used in embodiments of the invention. As examples, the computer system 100 could comprise one or more of: a personal computer; a server computer; a mobile telephone; a tablet; a laptop; a television set; a set top box; a games console; other mobile devices or consumer electronics devices; etc.

The computer program, and method of executing the computer program, as illustrated in figures 1 to 5 may then be installed and executed on a computer 202 as illustrated in figure 6. To this end the described techniques may also be embodied in a computer apparatus as illustrated in figure 6, for example be installed on the storage medium 204 and/or in the memory 206, provided one or more computer readable media such as a removable device 222, transmitted over network interface 216, and executed using one or more processors 208.

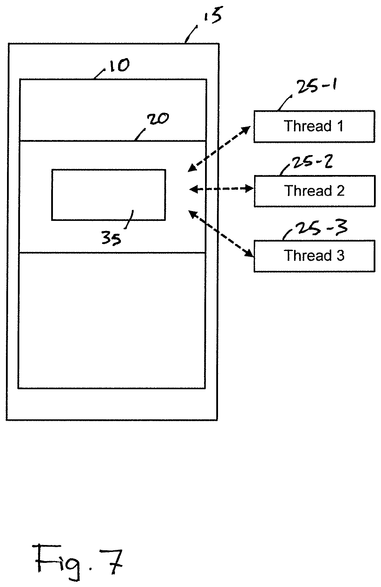

Embodiments of the invention also provide for a developer to take a computer program for example as illustrated in figure 7 and modify it to improve resilience to analysis and alteration by an attacker by adding suitable elements to provide the functionality described in respect of figures 1 to 5, either by modifying source code, modifying the memory mapped binary, in other ways, or using combinations of such techniques. For clarity in figure 7, reference numerals in common with figure 1 are used, even though figure 7 illustrates a computer program into which the described improvements have not yet been implemented, including first executable code 10, a program memory space 15, a code section 20, a code portion 35 of that code section 20, and a plurality of threads 25-1 ... 25-3.

In particular, the developer may add, to the arrangement of figure 7, one or more of suitable bootstrap code 45 as shown in figures 1-3, a suitable thread-local allocator 125 as shown in figures 4 and 5, and suitable first and second thread-local storage callbacks 110, 140 also as shown in figures 4 and 5. Once modified in this way, the computer program of figure 7 when executed carries out the methods described above in which code portions are separately reproduced, for each thread, to dynamically allocated memory associated with that thread.

It will be appreciated by the skilled that a variety of modifications may be made to the described embodiments without departing from the scope of the invention. For example, in reproducing code portions any or multiple ones of a multitude of different transformations for altering the code portion can be used, not limited to those already described. Furthermore. although the code portions may in particular be code portions providing or relating to security functions within the computer program code, they may instead or additionally comprise code or code portions which are not providing or relating to security functions. One advantage of this approach could be to make it harder for an attacker to determine whether a reproduced code portion is even security relevant or not.

It will be appreciated that the methods described have been shown as individual steps carried out in a specific order. However, the skilled person will appreciate that these steps may be combined or carried out in a different order whilst still achieving the desired result.

It will be appreciated that embodiments of the invention may be implemented using a variety of different information processing systems. In particular, although the figures and the discussion thereof provide an exemplary computing system and methods, these are presented merely to provide a useful reference in discussing various aspects of the invention. Embodiments of the invention may be carried out on any suitable data processing device, such as a personal computer, laptop, personal digital assistant, mobile telephone, set top box, television, server computer, etc. Of course, the description of the systems and methods has been simplified for purposes of discussion, and they are just one of many different types of system and method that may be used for embodiments of the invention. It will be appreciated that the boundaries between logic blocks are merely illustrative and that alternative embodiments may merge logic blocks or elements, or may impose an alternate decomposition of functionality upon various logic blocks or elements.

It will be appreciated that the above-mentioned functionality may be implemented as one or more corresponding modules as hardware and/or software. For example, the above-mentioned functionality may be implemented as one or more software components for execution by a processor of the system. Alternatively, the above-mentioned functionality may be implemented as hardware, such as on one or more field-programmable-gate-arrays (FPGAs), and/or one or more application-specific-integrated-circuits (ASICs), and/or one or more digital-signal-processors (DSPs), and/or other hardware arrangements. Method steps implemented in flowcharts contained herein, or as described above, may each be implemented by corresponding respective modules; multiple method steps implemented in flowcharts contained herein, or as described above, may be implemented together by a single module.

It will be appreciated that, insofar as embodiments of the invention are implemented by a computer program, then one or more storage media and/or one or more transmission media storing or carrying the computer program form aspects of the invention. The computer program may have one or more program instructions, or program code, which, when executed by one or more processors (or one or more computers), carries out an embodiment of the invention. The term "program", "software" or "item of software" as used herein, may be a sequence of instructions designed for execution on a computer system, and may include a subroutine, a function, a procedure, a module, an object method, an object implementation, an executable application, an applet, a servlet, source code, object code, byte code, a shared library, a dynamic linked library, and/or other sequences of instructions designed for execution on a computer system, potentially with data and/or other resources. The storage medium may be a magnetic disc (such as a hard drive or a floppy disc), an optical disc (such as a CD-ROM, a DVD-ROM or a BluRay disc), or a memory (such as a ROM, a RAM, EEPROM, EPROM, Flash memory or a portable/removable memory device), etc. The transmission medium may be a communications signal, a data broadcast, a communications link between two or more computers, and so forth.

## Claims

1. A method of executing computer program code comprising a code portion and a bootstrap element, wherein the computer program code is arranged to execute within multiple threads, the method comprising:
loading said computer program code into a program memory space as first executable code;
instantiating a plurality of threads for execution of said computer program code;
dynamically allocating a thread memory space for each thread;
for each thread, reproducing, by said bootstrap element, said code portion from the first executable code into the corresponding dynamically allocated thread memory space; and
during execution of each thread, executing the reproduced code portion in said dynamically allocated thread memory space instead of executing the code portion in the first executable code.

2. The method of claim 1 wherein the code portion loaded into the program memory space as first executable code is in encrypted form, and reproducing the code portion from the first executable code into each corresponding dynamically allocated thread memory space comprises decrypting the code portion and loading the decrypted form into each corresponding dynamically allocated thread memory space.

3. The method of claim 1 or 2 wherein reproducing the code portion from the first executable code into each of the corresponding dynamically allocated thread memory spaces comprises, for each thread, altering the code portion such that the reproduced code portion for each thread is different from that of each of the other threads.

4. The method of claim 3 wherein, for each thread, altering the code portion comprises altering the code portion using data unique to that thread.

5. The method of claim 4 wherein, for each thread, the data unique to that thread comprises one or more of: an id of the thread; an allocated address of the dynamically allocated thread memory space of the thread; a stack address of the thread; and one or more unique thread values from a thread environment block of the thread.

6. The method of any of claims 3 to 5 wherein all of the reproduced code portions are semantically equivalent.

7. The method of any of claims 3 to 5 wherein at least some of the reproduced code portions are not semantically equivalent to each other, and the first executable code further comprises a code portion decoder arranged to interface with each reproduced code portion, so that each combination of one of the reproduced code portions with the decoder is semantically equivalent to each of the other such combinations.

8. The method of any preceding claim further comprising:
before reproducing said code portion into each corresponding dynamically allocated thread memory space, allocating a first code portion memory space within each dynamically allocated thread memory space, wherein the code portion is then reproduced into that first code portion memory space of each thread;
subsequently during the same execution of the first executable code, allocating a second code portion memory space within each dynamically allocated thread memory space at a different position within said dynamically allocated thread memory space to said first code portion memory space, reproducing the code portion into that second code portion memory space, and executing the code portion in the second code portion memory space.

9. The method of any preceding claim wherein the computer program code comprises a further code portion, the method further comprising:
before reproducing said code portion from the first executable code into each corresponding dynamically allocated thread memory space, allocating a first code portion memory space within each dynamically allocated thread memory space, wherein the code portion is then reproduced from the first executable code into that first code portion memory space of each thread;
subsequently during the same execution of the computer program code, allocating a second code portion memory space within each dynamically allocated thread memory space which overlaps with said first code portion memory space, reproducing the further code portion from the first executable code into the second code portion memory space, and executing the further code portion in the second code portion memory space.

10. A method of modifying a computer program comprising a code portion, wherein the computer program is arranged to execute within multiple threads, the method comprising adding to the computer program a bootstrap element which is arranged to reproduce said code portion into a dynamically allocated thread memory space of each thread, and to cause the reproduced code portion to execute, for each thread, from the corresponding dynamically allocated thread memory space.

11. The method of claim 10 wherein reproducing said code portion comprises one or more of: decrypting said code portion; reproducing said code portion so as to be different in each dynamically allocated thread memory space; and reproducing said code portion so that the reproduced code portion in each dynamically allocated thread memory space is not semantically equivalent to the reproduced code portion in each of the other dynamically allocated thread memory spaces.

12. An apparatus arranged to carry out a method according to any one of claims 1 to 11.

13. A computer program which, when executed by one or more processors, causes the one or more processors to carry out a method according to any one of claims 1 to 11.

14. A computer-readable medium storing a computer program according to claim 13.

## Patentansprüche

1. Verfahren zur Ausführung von Computerprogrammcode, umfassend einen Codeabschnitt und ein Bootstrap-Element, wobei der Computerprogrammcode zur Ausführung innerhalb mehrerer Threads angeordnet ist, wobei das Verfahren Folgendes umfasst:
Laden des Computerprogrammcodes in einen Programmspeicher als ersten ausführbaren Code;
Instanziieren einer Vielzahl von Threads zur Ausführung des Computerprogrammcodes;
dynamisches Zuweisen eines Thread-Speicherbereichs für jeden Thread;
für jeden Thread, Reproduzieren, durch das genannte Bootstrap-Element, des Codeabschnitts aus dem ersten ausführbaren Code in den entsprechenden dynamisch zugewiesenen Thread-Speicherbereich; und
während der Ausführung jedes Threads, Ausführen des reproduzierten Codeabschnitts im dynamisch zugewiesenen Thread-Speicherbereich, anstatt den Codeabschnitt im ersten ausführbaren Code auszuführen.

2. Verfahren nach Anspruch 1, wobei der als erster ausführbarer Code in den Programmspeicher geladene Codeabschnitt in verschlüsselter Form vorliegt und das Reproduzieren des Codeabschnitts aus dem ersten ausführbaren Code in jeden entsprechenden dynamisch zugewiesenen Thread-Speicherbereich das Entschlüsseln des Codeabschnitts und das Laden der entschlüsselten Form in jeden entsprechenden dynamisch zugewiesenen Thread-Speicherbereich umfasst.

3. Verfahren nach Anspruch 1 oder 2, wobei das Reproduzieren des Codeabschnitts aus dem ersten ausführbaren Code in jeden der entsprechenden dynamisch zugewiesenen Thread-Speicherbereiche das Ändern des Codeabschnitts für jeden Thread so umfasst, dass sich der reproduzierte Codeabschnitt für jeden Thread von dem der anderen Threads unterscheidet.

4. Verfahren nach Anspruch 3, wobei für jeden Thread das Ändern des Codeabschnitts das Ändern des Codeabschnitts unter Verwendung von für diesen Thread eindeutigen Daten umfasst.

5. Verfahren nach Anspruch 4, wobei die für jeden Thread eindeutigen Daten einen oder mehrere der folgenden Elemente umfassen: eine Thread-ID; eine zugewiesene Adresse des dynamisch zugewiesenen Thread-Speicherbereichs des Threads; eine Stack-Adresse des Threads; und einen oder mehrere eindeutige Thread-Werte aus einem Thread-Umgebungsblock des Threads.

6. Verfahren nach einem der Ansprüche 3 bis 5, wobei alle reproduzierten Codeabschnitte semantisch äquivalent sind.

7. Verfahren nach einem der Ansprüche 3 bis 5, wobei mindestens einige der reproduzierten Codeabschnitte nicht semantisch äquivalent zueinander sind und der erste ausführbare Code ferner umfassend einen Codeabschnittsdecoder, der angeordnet ist, um mit jedem reproduzierten Codeabschnitt so zu interagieren, dass jede Kombination eines der reproduzierten Codeabschnitte mit dem Decoder semantisch äquivalent zu jeder der anderen solchen Kombinationen ist.

8. Verfahren nach einem der vorstehenden Ansprüche, ferner umfassend:
vor dem Reproduzieren des Codeabschnitts in jeden entsprechenden dynamisch zugewiesenen Thread-Speicherbereich, Zuweisen eines ersten Codeabschnitt-Speicherbereichs innerhalb jedes dynamisch zugewiesenen Thread-Speicherbereichs, wobei der Codeabschnitt dann in diesen ersten Codeabschnitt-Speicherbereich jedes Threads reproduziert wird;
anschließend, während der gleichen Ausführung des ersten ausführbaren Codes, Zuweisen eines zweiten Codeabschnitt-Speicherbereichs innerhalb jedes dynamisch zugewiesenen Thread-Speicherbereichs an einer anderen Position innerhalb des dynamisch zugewiesenen Thread-Speicherbereichs als der erste Codeabschnitt-Speicherbereich, Reproduzieren des Codeabschnitts in diesen zweiten Codeabschnitt-Speicherbereich und Ausführen des Codeabschnitts im zweiten Codeabschnitt-Speicherbereich.

9. Verfahren nach einem der vorstehenden Ansprüche, wobei der Computerprogrammcode einen weiteren Codeabschnitt umfasst, das Verfahren ferner umfassend:
vor dem Reproduzieren des Codeabschnitts aus dem ersten ausführbaren Code in jeden entsprechenden dynamisch zugewiesenen Thread-Speicherbereich, Zuweisen eines ersten Codeabschnitt-Speicherbereichs innerhalb jedes dynamisch zugewiesenen Thread-Speicherbereichs, wobei der Codeabschnitt dann aus dem ersten ausführbaren Code in diesen ersten Codeabschnitt-Speicherbereich jedes Threads reproduziert wird;
anschließend, während der gleichen Ausführung des Computerprogrammcodes, Zuweisen eines zweiten Codeabschnitt-Speicherbereichs innerhalb jedes dynamisch zugewiesenen Thread-Speicherbereichs, der sich mit dem ersten Codeabschnitt-Speicherbereich überschneidet, Reproduzieren des weiteren Codeabschnitts aus dem ersten ausführbaren Code in den zweiten Codeabschnitt-Speicherbereich und Ausführen des weiteren Code-Abschnitts in dem zweiten Codeabschnitt-Speicherbereich.

10. Verfahren zum Modifizieren eines Computerprogramms, das einen Codeabschnitt umfasst, wobei das Computerprogramm so angeordnet ist, dass es in mehreren Threads ausgeführt wird, wobei das Verfahren das Hinzufügen eines Bootstrap-Elements zum Computerprogramm umfasst, das angeordnet ist, um den Codeabschnitt in einen dynamisch zugewiesenen Thread-Speicherbereich jedes Threads zu reproduzieren und zu bewirken, dass der reproduzierte Codeabschnitt für jeden Thread aus dem entsprechenden dynamisch zugewiesenen Thread-Speicherbereich ausgeführt wird.

11. Verfahren nach Anspruch 10, wobei das Reproduzieren des Codeabschnitts eines oder mehrere der folgenden Schritte umfasst: Entschlüsseln des Codeabschnitts; Reproduzieren des Codeabschnitts so, dass er sich in jedem dynamisch zugewiesenen Thread-Speicherbereich unterscheidet; und Reproduzieren des Codeabschnitts so, dass der reproduzierte Codeabschnitt in jedem dynamisch zugewiesenen Thread-Speicherbereich nicht semantisch äquivalent zu dem reproduzierten Codeabschnitt in jedem der anderen dynamisch zugewiesenen Thread-Speicherbereiche ist.

12. Einrichtung, die angeordnet ist, um ein Verfahren nach einem der Ansprüche 1 bis 11 auszuführen.

13. Computerprogramm, welches, wenn es durch einen oder mehreren Prozessoren ausgeführt wird, den einen oder die mehreren Prozessoren dazu veranlasst, das Verfahren nach einem der Ansprüche 1 bis 11 auszuführen.

14. Computerlesbares Speichermedium, das ein Computerprogramm nach Anspruch 13 speichert.

## Revendications

1. Procédé d'exécution de code de programme informatique comprenant une portion de code et un élément d'amorçage, dans lequel le code de programme informatique est agencé pour s'exécuter au sein de multiples threads, le procédé comprenant :
le chargement dudit code de programme informatique dans un espace mémoire de programme en tant que premier code exécutable ;
l'instanciation d'une pluralité de threads pour l'exécution dudit code de programme informatique ;
l'allocation dynamique d'un espace mémoire de thread pour chaque thread ;
pour chaque thread, la reproduction, par ledit élément d'amorçage, de ladite portion de code du premier code exécutable dans l'espace mémoire de thread alloué dynamiquement correspondant ; et
lors de l'exécution de chaque thread, l'exécution de la portion de code reproduite dans ledit espace mémoire de thread alloué dynamiquement au lieu de l'exécution de la portion de code dans le premier code exécutable.

2. Procédé selon la revendication 1, dans lequel la portion de code chargée dans l'espace mémoire de programme en tant que premier code exécutable est sous forme chiffrée, et la reproduction de la portion de code du premier code exécutable dans chaque espace mémoire de thread alloué dynamiquement correspondant comprend le déchiffrement de la portion de code et le chargement de la forme déchiffrée dans chaque espace mémoire de thread alloué dynamiquement correspondant.

3. Procédé selon la revendication 1 ou 2, dans lequel la reproduction de la portion de code du premier code exécutable dans chacun des espaces mémoire de thread alloués dynamiquement correspondants comprend, pour chaque thread, la modification de la portion de code de sorte que la portion de code reproduite pour chaque thread soit différente de celle de chacun des autres threads.

4. Procédé selon la revendication 3, dans lequel, pour chaque thread, la modification de la portion de code comprend la modification de la portion de code à l'aide de données uniques à ce thread.

5. Procédé selon la revendication 4, dans lequel, pour chaque thread, les données uniques à ce thread comprennent un ou plusieurs parmi : un identifiant du thread ; une adresse allouée de l'espace mémoire de thread alloué dynamiquement du thread ; une adresse de pile du thread ; et une ou plusieurs valeurs de thread uniques provenant d'un bloc d'environnement de thread du thread.

6. Procédé selon l'une quelconque des revendications 3 à 5, dans lequel toutes les portions de code reproduites sont sémantiquement équivalentes.

7. Procédé selon l'une quelconque des revendications 3 à 5, dans lequel au moins certaines des portions de code reproduites ne sont pas sémantiquement équivalentes entre elles, et le premier code exécutable comprend en outre un décodeur de portion de code agencé pour s'interfacer avec chaque portion de code reproduite, de sorte que chaque combinaison de l'une des portions de code reproduites avec le décodeur soit sémantiquement équivalente à chacune de ces autres combinaisons.

8. Procédé selon une quelconque revendication précédente, comprenant en outre :
avant de reproduire ladite portion de code dans chaque espace mémoire de thread alloué dynamiquement correspondant, l'allocation d'un premier espace mémoire de portion de code au sein de chaque espace mémoire de thread alloué dynamiquement, dans lequel la portion de code est ensuite reproduite dans ce premier espace mémoire de portion de code de chaque thread ;
par la suite, au cours de la même exécution du premier code exécutable, l'allocation d'un second espace mémoire de portion de code dans chaque espace mémoire de thread alloué dynamiquement à une position différente dans ledit espace mémoire de thread alloué dynamiquement audit premier espace mémoire de portion de code, la reproduction de la portion de code dans ce seconde espace mémoire de portion de code, et l'exécution de la portion de code dans le seconde espace mémoire de portion de code.

9. Procédé selon une quelconque revendication précédente, dans lequel le code de programme informatique comprend une portion de code supplémentaire, le procédé comprenant en outre :
avant de reproduire ladite portion de code du premier code exécutable dans chaque espace mémoire de thread alloué dynamiquement correspondant, l'allocation d'un premier espace mémoire de portion de code au sein de chaque espace mémoire de thread alloué dynamiquement, dans lequel la portion de code est ensuite reproduite du premier code exécutable dans ce premier espace mémoire de portion de code de chaque thread ;
par la suite, au cours de la même exécution du code de programme informatique, l'allocation d'un second espace mémoire de portion de code au sein de chaque espace mémoire de thread alloué dynamiquement qui chevauche ledit premier espace mémoire de portion de code, la reproduction de la portion de code supplémentaire du premier code exécutable dans le seconde espace mémoire de portion de code, et l'exécution de la portion de code supplémentaire dans le seconde espace mémoire de portion de code.

10. Procédé de modification d'un programme informatique comprenant une portion de code, dans lequel le programme informatique est agencé pour s'exécuter au sein de multiples threads, le procédé comprenant l'ajout au programme informatique d'un élément d'amorçage qui est agencé pour reproduire ladite portion de code dans un espace mémoire de thread alloué dynamiquement de chaque thread, et pour amener la portion de code reproduite à s'exécuter, pour chaque thread, à partir de l'espace mémoire de thread alloué dynamiquement correspondant.

11. Procédé selon la revendication 10, dans lequel la reproduction de ladite portion de code comprend un ou plusieurs parmi : le déchiffrement de ladite portion de code ; la reproduction de ladite portion de code de manière à ce qu'elle soit différente dans chaque espace mémoire de thread alloué dynamiquement ; et la reproduction de ladite portion de code de sorte que la portion de code reproduite dans chaque espace mémoire de thread alloué dynamiquement ne soit pas sémantiquement équivalente à la portion de code reproduite dans chacun des autres espaces mémoire de thread alloués dynamiquement.

12. Appareil agencé pour mettre en œuvre un procédé selon l'une quelconque des revendications 1 à 11.

13. Programme informatique qui, lorsqu'il est exécuté par un ou plusieurs processeurs, amène les un ou plusieurs processeurs à exécuter un procédé selon l'une quelconque des revendications 1 à 11.

14. Support lisible par ordinateur stockant un programme informatique selon la revendication 13.
